(19) Europäisches Patentamt
European Patent Office
Office européen des brevets

(11) EP 4 653 864 A1

(12) **EUROPEAN PATENT APPLICATION**
published in accordance with Art. 153(4) EPC

(43) Date of publication:
**26.11.2025 Bulletin 2025/48**

(21) Application number: **24744613.1**

(22) Date of filing: **15.01.2024**

(51) International Patent Classification (IPC):
***G01N 30/88*** *(2006.01)* ***B01J 20/281*** *(2006.01)*
***B01J 20/288*** *(2006.01)* ***B01J 20/30*** *(2006.01)*
***C08F 38/02*** *(2006.01)*

(52) Cooperative Patent Classification (CPC):
**B01J 20/281; B01J 20/288; B01J 20/30;**
**C08F 38/02; G01N 30/88**

(86) International application number:
**PCT/JP2024/000780**

(87) International publication number:
**WO 2024/154690 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.01.2023 JP 2023004250**

(71) Applicants:
- **Daicel Corporation**
  **Osaka-shi, Osaka 530-0011 (JP)**
- **NATIONAL UNIVERSITY CORPORATION TOKAI NATIONAL HIGHER EDUCATION AND RESEARCH SYSTEM**
  **Nagoya-shi, Aichi 464-8601 (JP)**

(72) Inventors:
- **IKAI, Tomoyuki**
  **Nagoya-shi, Aichi 464-8601 (JP)**
- **YASHIMA, Eiji**
  **Nagoya-shi, Aichi 464-8601 (JP)**

(74) Representative: **Grünecker Patent- und Rechtsanwälte**
**PartG mbB**
**Leopoldstraße 4**
**80802 München (DE)**

# (54) SEPARATION AGENT

(57) A separation agent having a polyacetylene compound supported on a carrier, wherein the polyacetylene compound has at least one type of repeating unit represented by any one of General Formulae (1) to (3):

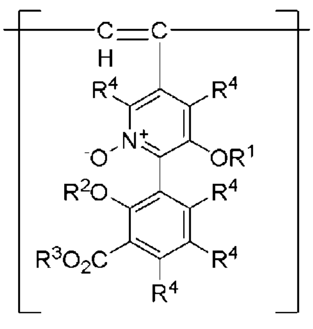

(1)

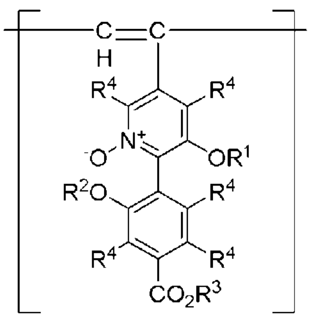

(2)

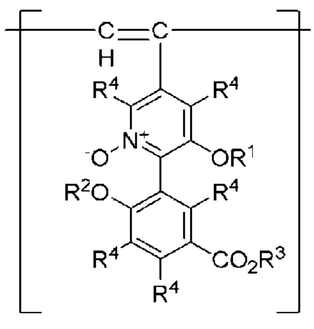

(3)

where $R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons; and $R^4$ are each independently a hydrogen atom or an alkyl group having from 1 to 20 carbons, the alkyl group optionally substituted with a halogen atom.

EP 4 653 864 A1

## Description

### Technical Field

The present disclosure relates to a separation agent.

### Background Art

In the research and development of compounds, and particularly organic compounds, methods such as chromatography using a separation agent are widely used to separate and purify products. In order to produce a product with high purity when separating and purifying a product, it is often necessary to separate the product from a compound having a structural formula identical or very similar to that of the product. In the field of pharmaceuticals in particular, there may be cases of significant differences in efficacy, toxicity, metabolism, and distribution between optical isomers, and therefore optical resolution is extremely important. Thus, in fields such as pharmaceuticals and organic materials, a demand exists for separation agents having high separation performance.

A technique using a polysaccharide derivative as a separation agent has been developed as a useful method for separating compounds. For example, Patent Document 1 discloses a filler for separating optical isomers, the filler having, on a carrier, a cellulose derivative or an amylose derivative chemically bonded to the carrier.

Meanwhile, as a separation agent other than a polysaccharide derivative, for example, Patent Document 2 and Non-Patent Literature 1 each disclose an optical isomer separation agent composed of a polyacetylene compound having a unidirectional helical structure. This separation agent for optical isomers is suitable for separating specific chiral aromatic alcohols such as 2,2'-biphenol derivatives and 1,1'-bi-2-naphthol derivatives.

### Citation List

### Patent Document

Patent Document 1: WO 2008/102920

Patent Document 2: JP 2016-140845 A

### Non-Patent Literature

Non-Patent Literature 1: Chem. Rev. 2016, 116, 3, pp. 1094-1138

### Summary of Invention

### Technical Problem

However, since a separation agent exhibits separation performance according to the molecular structure thereof, even if the separation agent can separate a specific compound, it is often not effective for separating other compounds. For example, the separation agents described in Patent Document 2 and Non-Patent Literature 1 can separate an aromatic alcohol, but are not suitable for separating a compound such as an aliphatic alcohol. In view of such circumstances, in order to efficiently separate compounds that have been difficult to separate using known separation agents and compounds for which better separation performance is required, the variety of separation agents must be increased.

Thus, an object of the present disclosure is to provide a novel separation agent having separation properties different from existing separation agents.

### Solution to Problem

To solve the issues described above, the inventors of the present invention conducted intensive studies. As a result, the inventors discovered that a supported material containing a polyacetylene compound supported on a carrier, the polyacetylene compound having a 2-phenylpyridine-N-oxide structure in a side chain, functions as a separation agent. That is, an overview of the present disclosure is as described below.

[1] A separation agent containing a polyacetylene compound supported on a carrier,

the polyacetylene compound having at least one type of repeating unit represented by any one of General Formulae (1) to (3):

[Chem. 1]

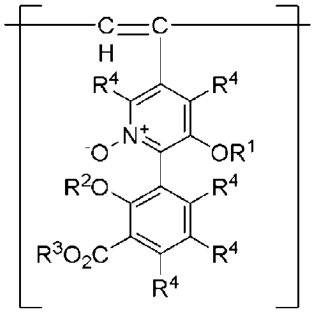

(1)

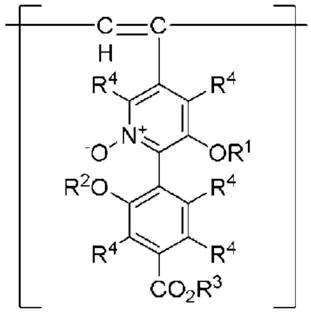

(2)

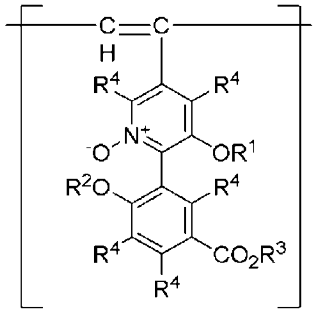

(3)

where

$R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons; and

$R^4$ are each independently a hydrogen atom or an alkyl group having from 1 to 20 carbons, the alkyl group optionally substituted with a halogen atom.

[2] The separation agent according to [1], wherein the polyacetylene compound contains 80 mol% or more of the repeating unit represented by any one of General Formulae (1) to (3) with respect to all repeating units derived from an acetylene monomer.

[3] The separation agent according to [1] or [2], wherein the repeating unit represented by any one of General Formulae (1) to (3) is a repeating unit represented by any one of General Formulae (1S) to (3S) or a repeating unit represented by any one of General Formulae (1R) to (3R).

[Chem. 2]

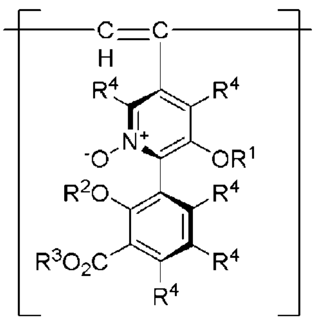

(1S)

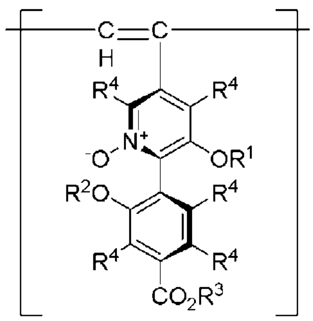

(2S)

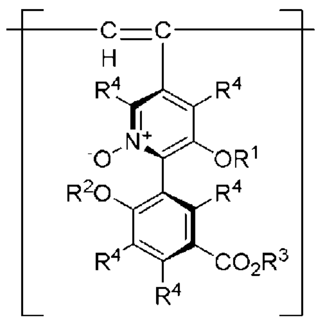

(3S)

[Chem. 3]

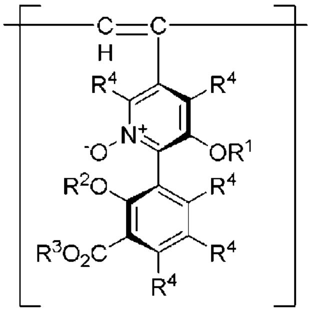

(1R)

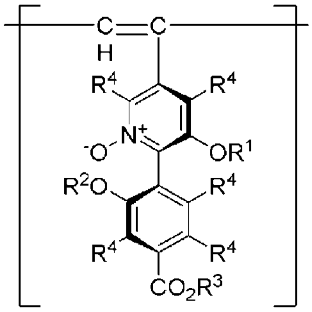

(2R)

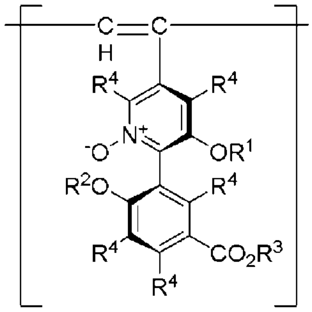

(3R)

where
$R^1$, $R^2$, $R^3$, and $R^4$ are synonymous with $R^1$, $R^2$, $R^3$, and $R^4$ in General Formulae (1) to (3), respectively.

[4] The separation agent according to [3], wherein the separation agent is an optical isomer separation agent.

[5] A chromatography column having the separation agent described in any one of [1] to [4] packed in a column container.

[6] A chromatography device provided with the chromatography column described in [5].

[7] A method for producing a separation agent,

wherein the method for producing a separation agent comprises a supporting step in which a polyacetylene compound having at least one type of repeating unit represented by any one of General Formulae (1) to (3) is supported on a carrier:

[Chem. 4]

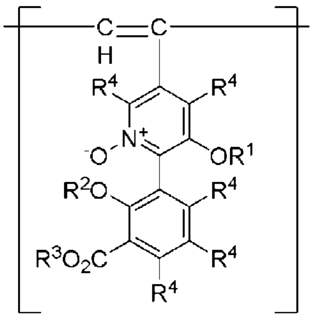

(1)

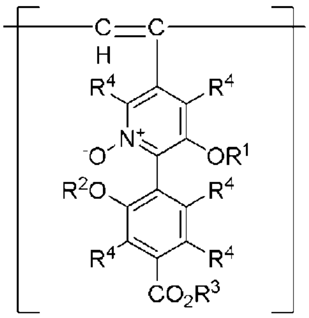

(2)

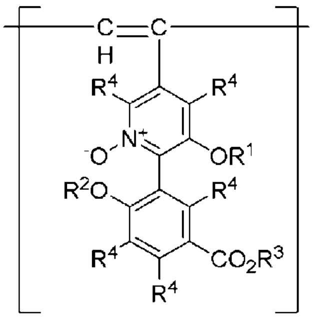

(3)

where
$R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons; and
$R^4$ are each independently a hydrogen atom or an alkyl group having from 1 to 20 carbons, the alkyl group optionally substituted with a halogen atom.

Advantageous Effects of Invention

According to the present disclosure, a novel separation agent having separation properties different from those of existing separation agents can be provided.

The problems and effects of the present disclosure are not limited to those specifically described above and also include those obvious to a person skilled in the art based on the entire specification.

Brief Description of Drawings

The figure is schematic diagrams for explaining the correspondence between the appearance of a peak in a chromatogram and a separation coefficient.

Description of Embodiments

The present disclosure is described in detail below with reference to specific embodiments. However, each of the configurations in each embodiment, combinations thereof, and the like are merely examples, and various additions, omissions, substitutions, and other changes of the configurations may be made as appropriate within a scope that does not depart from the spirit of the present disclosure. The present disclosure is not limited to the embodiments.

Also, each aspect disclosed in the present specification can be combined with any other feature disclosed herein.

1. Separation Agent

One embodiment of the present disclosure is a separation agent containing a polyacetylene compound supported on a carrier, the polyacetylene compound having a 2-phenylpyridine-N-oxide structure in a side chain.

Polyacetylene Compound

The polyacetylene compound has at least one type of repeating unit represented by any one of General Formulae (1) to (3).

[Chem. 5]

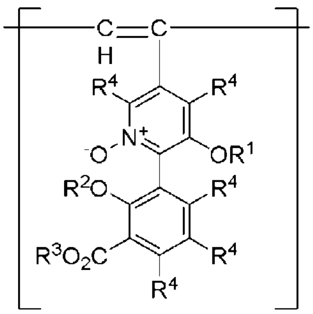
(1)

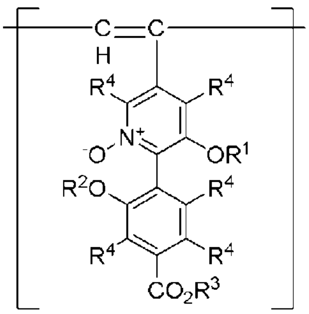
(2)

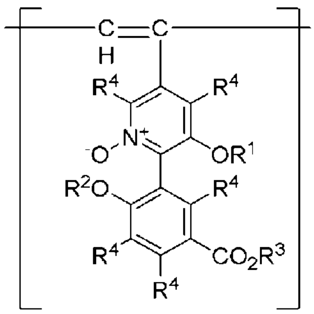
(3)

In General Formulae (1) to (3), $R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons.

The number of carbons of the alkyl group represented by $R^1$ and $R^2$ is usually one or more, and usually 20 or less, preferably 16 or less, more preferably 12 or less, and further preferably 8 or less. That is, preferable ranges of the number of carbons of the alkyl group represented by $R^1$ and $R^2$ include ranges of from 1 to 16, from 1 to 12, and from 1 to 8. In the present disclosure, the "number of carbons of the alkyl group" does not include the number of carbons of a substituent on the alkyl group.

The number of carbons of the alkyl group represented by $R^3$ is usually one or more, preferably 2 or more, and more preferably 3 or more, and is usually 20 or less, preferably 16 or less, more preferably 12 or less, and even more preferably 8 or less. That is, preferable ranges of the number of carbons of the alkyl group represented by $R^3$ include, for example, ranges of from 2 to 20, from 1 to 16, from 2 to 16, from 2 to 12, and from 3 to 8.

Examples of the unsubstituted alkyl group having from 1 to 20 carbons include a linear or branched alkyl group having from 1 to 20 carbons and a cycloalkyl group having from 1 to 20 carbons. Specific examples of the linear or branched alkyl group having from 1 to 20 carbons include a methyl group, an ethyl group, an n-propyl group, an isopropyl group, an n-butyl group, a sec-butyl group, a tert-butyl group, an isobutyl group, an n-pentyl group, an isopentyl group, a neopentyl group, a 2-methylbutyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, and an n-icosyl group. Specific examples of the cycloalkyl group having from 1 to 20 carbons include a cyclopropyl group, a cyclobutyl group, a cyclopentyl group, a cyclohexyl group, and a decahydronaphthyl group.

Examples of the halogen atom for an optional substituent of the alkyl group represented by $R^1$, $R^2$, and $R^3$ include a fluorine atom, a chlorine atom, a bromine atom, and an iodine atom, and a fluorine atom is preferable.

The number of carbons of the alkoxy group for an optional substituent of the alkyl group represented by $R^1$, $R^2$ and $R^3$ is usually one or more, and usually 10 or less, preferably 8 or less, more preferably 6 or less, and still more preferably 4 or less. That is, preferable ranges of the number of carbons of the alkoxy group include ranges from 1 to 8, from 1 to 6, and

from 1 to 4.

Specific examples of the alkoxy group having from 1 to 10 carbons include a methoxy group, an ethoxy group, an n-propoxy group, an isopropoxy group, a cyclopropoxy group, an n-butoxy group, a sec-butoxy group, a tert-butoxy group, an isobutoxy group, a cyclobutoxy group, an n-pentyloxy group, an isopentyloxy group, a neopentyloxy group, a 2-methylbutoxy group, a cyclopentyloxy group, an n-hexyloxy group, a cyclohexyloxy group, an n-heptyloxy group, an n-octyloxy group, an n-nonyloxy group, and an n-decyloxy group.

$R^1$ is preferably an unsubstituted alkyl group having from 1 to 20 carbons or an alkyl group having from 1 to 20 carbons and substituted with an alkoxy group having from 1 to 10 carbons.

$R^2$ is preferably an unsubstituted alkyl group having from 1 to 20 carbons or an alkyl group having from 1 to 20 carbons and substituted with a C1-10 alkoxy group, and is more preferably an alkyl group having from 1 to 20 carbons and substituted with an alkoxy group having from 1 to 10 carbons.

$R^3$ is preferably an unsubstituted alkyl group having from 1 to 20 carbons.

As the combinations of $R^1$ to $R^3$, a combination of the preferable groups of $R^1$ to $R^3$ described above is preferable. In addition, in this combination, $R^4$ is preferably a hydrogen atom.

In General Formulae (1) to (3), $R^4$ are each independently a hydrogen atom or an alkyl group having from 1 to 20 carbons and optionally substituted with a halogen atom, and is preferably a hydrogen atom.

The unsubstituted alkyl group having from 1 to 20 carbons represented by $R^4$ is synonymous with the unsubstituted alkyl group having from 1 to 20 carbons represented by $R^1$, and preferred embodiments thereof are also the same.

The halogen atom for an optional substituent of the alkyl group represented by $R^4$ is synonymous with the halogen atom for an optional substituent of the alkyl group represented by $R^1$, and preferred embodiments thereof are also the same.

In addition, from the viewpoint of achieving high separation performance, the repeating unit represented by any one of General Formulae (1) to (3) preferably includes a repeating unit represented by General Formula (2), and more preferably is a repeating unit represented by General Formula (2).

The 2-phenylpyridine-N-oxide structure in the side chain of the polyacetylene compound exhibits axial chirality due to the group represented by $-OR^1$ and the group represented by $-OR^2$. Therefore, the repeating unit represented by General Formula (1) includes a repeating unit based on two atropisomers of a 2-phenylpyridine-N-oxide structure, that is, a repeating unit represented by General Formula (1S) and a repeating unit represented by General Formula (1R). Similarly, the repeating unit represented by General Formula (2) includes a repeating unit represented by General Formula (2S) and a repeating unit represented by General Formula (2R), and the repeating unit represented by General Formula (3) includes a repeating unit represented by General Formula (3S) and a repeating unit represented by General Formula (3R).

Hereinafter, a repeating unit represented by any of General Formulae (1S) to (3S) may be referred to as an "S-enantiomer unit", and a repeating unit represented by any of General Formulae (1R) to (3R) may be referred to as an "R-enantiomer unit".

[Chem. 6]

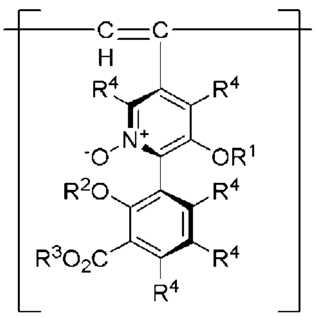
(1S)

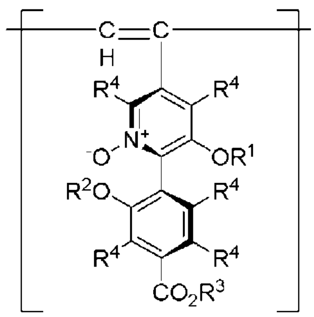
(2S)

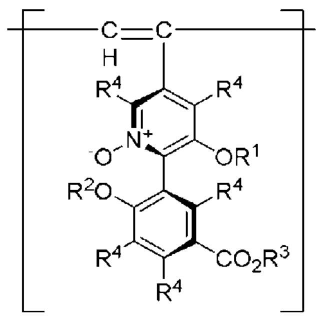
(3S)

[Chem. 7]

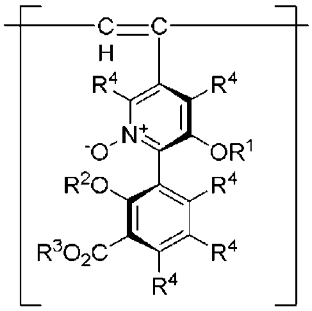
(1R)

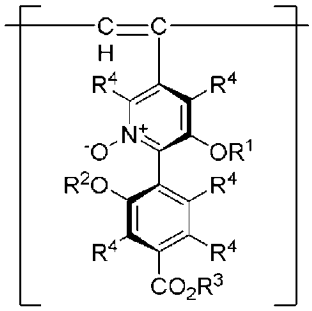
(2R)

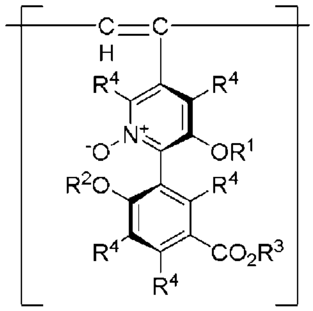
(3R)

In General Formulae (1S) to (3S) and General Formulae (1R) to (3R), $R^1$, $R^2$, $R^3$, and $R^4$ are synonymous with $R^1$, $R^2$, $R^3$, and $R^4$ in General Formulae (1) to (3), respectively, and preferred embodiments thereof are also the same.

When the polyacetylene compound has a unidirectional helical structure (i.e., a right-handed helical structure or a left-handed helical structure), the polyacetylene compound exhibits an optical resolution capability. Therefore, a separation agent in which an acetylene compound having a unidirectional helical structure is supported on a carrier can be used not only for separation of an achiral compound but also for separation of a chiral compound.

Since the repeating unit represented by any one of General Formulae (1) to (3) is either an S-enantiomer unit or an R-enantiomer unit, the polyacetylene compound exhibits a unidirectional helical structure. Therefore, from the viewpoint of imparting an optical resolution capability to the separation agent, the repeating unit represented by any one of General Formulae (1) to (3) is preferably a repeating unit represented by any one of General Formulae (1S) to (3S) or a repeating unit represented by any one of General Formulae (1R) to (3R).

The polyacetylene compound is a polymer composed of a repeating unit derived from an acetylene monomer, and the proportion of the repeating unit represented by any one of General Formulae (1) to (3) to all the repeating units derived from the acetylene monomer is not particularly limited, but from the viewpoint of further improving the separation performance, the proportion thereof is preferably from 80 mol% to 100 mol%, more preferably from 85 mol% to 100 mol%, still more preferably from 90 mol% to 100 mol%, and particularly preferably from 95 mol% to 100 mol%.

The polyacetylene compound may be a polymer composed only of the repeating unit represented by any one of General Formulae (1) to (3), or may contain another acetylene monomer-derived repeating unit (hereinafter, sometimes referred to as the "additional repeating unit").

The additional repeating unit is not particularly limited as long as the additional repeating unit does not cause an extreme decrease in separation performance, and may be a group not involved in chiral recognition, such as, for example, an ethenylene group (-CH=CH-). Moreover, examples of the additional repeating unit include a repeating unit having a reactive group that can chemically bond to a functional group present on the surface of the carrier, such as, for example, a repeating unit having an alkoxysilyl group in a side chain.

The number average molecular weight (Mn) of the polyacetylene compound is not particularly limited, but is preferably $0.50 \times 10^5$ or greater, more preferably $1.00 \times 10^5$ or greater, and even more preferably $1.50 \times 10^5$ or greater, and is preferably $10.00 \times 10^5$ or less, more preferably $7.00 \times 10^5$ or less, and even more preferably $5.00 \times 10^5$ or less. That is, preferable ranges of the number average molecular weight (Mn) of the polyacetylene compound include ranges of from $0.50 \times 10^5$ to $10.00 \times 10^5$, from $1.00 \times 10^5$ to $7.00 \times 10^5$, and from $1.50 \times 10^5$ to $5.00 \times 10^5$.

The weight average molecular weight (Mw) of the polyacetylene compound is not particularly limited, but is preferably $0.50 \times 10^5$ or greater, more preferably $1.00 \times 10^5$ or greater, and even more preferably $1.50 \times 10^5$ or greater, and is preferably $10.00 \times 10^5$ or less, more preferably $9.00 \times 10^5$ or less, and even more preferably $8.00 \times 10^5$ or less. That is, preferable ranges of the weight average molecular weight (Mw) of the polyacetylene compound include ranges of from $0.50 \times 10^5$ to $10.00 \times 10^5$, from $1.00 \times 10^5$ to $9.00 \times 10^5$, and from $1.50 \times 10^5$ to $8.00 \times 10^5$.

The polydispersity index (PDI) of the polyacetylene compound is not particularly limited, but is usually 1.00 or greater, and preferably 5.00 or less, more preferably 4.00 or less, and still more preferably 3.00 or less. That is, preferable ranges of the polydispersity index (PDI) of the polyacetylene compound include ranges of from 1.00 to 5.00, from 1.00 to 4.00, and from 1.00 to 3.00.

The number average molecular weight (Mn) and the weight average molecular weight (Mn) of the polyacetylene compound are calculated based on size exclusion chromatography (SEC) and a calibration of polystyrene standards. In size exclusion chromatography (SEC), the measurement is performed on the conditions described in the Examples section.

The polydispersity index (PDI) of the polyacetylene compound is calculated by dividing the weight average molecular weight (Mn) calculated by the above-described method by the number average molecular weight (Mn).

The mode in which the polyacetylene compound is supported on the carrier is not particularly limited, and any mode typified by modes known in the related art and modes similar thereto can be appropriately used. Examples of known modes include a mode in which the polyacetylene compound is physically adsorbed (coated) on the carrier; and a mode in which the polyacetylene compound is supported on the carrier through a chemical bond generated by a reaction between a reactive group of the polyacetylene compound and a functional group present on the surface of the carrier.

In the separation agent according to the present embodiment, the supported amount of the polyacetylene compound depends on details such as the type of carrier and the shape of the carrier, but is an amount that can cover 60% or more, preferably 80% or more, more preferably 90% or more, and even more preferably 95% or more of the surface of the carrier. Alternatively, in relation to the total amount of the separation agent, the supported amount of the polyacetylene compound in the separation agent is preferably from 1 wt.% to 60 wt.%, more preferably from 5 wt.% to 50 wt.%, and still more preferably from 5 wt.% to 30 wt.%.

Carrier

Examples of the carrier that supports the polyacetylene compound include an organic carrier, an inorganic carrier, and an organic-inorganic hybrid carrier, and an inorganic carrier is preferable.

Examples of the organic carrier include polystyrene, poly(meth)acrylamide, and poly(meth)acrylate. Examples of the inorganic carrier include silica gel, alumina, magnesia, glass, kaolin, titanium oxide, zirconium oxide, silicate, and hydroxyapatite, and silica gel is preferable. Examples of the organic-inorganic hybrid carrier include an organic-inorganic hybrid carrier formed by a sol-gel reaction between an alkoxysilane and an alkyl-substituted or alkylene-substituted alkoxysilane compound.

The carrier may be a non-porous carrier or a porous carrier, but is preferably a porous carrier. The term "porous carrier" means a carrier in which pores are formed throughout the carrier, and includes a surface-porous carrier (so-called core-shell carrier) having a structure in which a non-porous core is covered with a porous layer. When the carrier is a porous carrier, the BET specific surface area thereof is preferably from 10 $m^2$/g to 600 $m^2$/g. In addition, from the perspective of improving separation performance, the porous carrier preferably has an average pore size of from 10 nm to 5000 nm, as measured by mercury intrusion porosimetry.

The form of the carrier is not particularly limited, and examples thereof include particles, a membrane, and a porous cylindrical body (monolith) that is housed in a column tube in a liquid-tight manner. From the viewpoint of achieving uniform separation performance, the carrier is preferably in the form of particles, and among the forms of particles, the carrier is preferably in the form of spherical particles. In the present disclosure, "spherical" means not only a true spherical form, but also forms having circular, substantially circular, elliptical, or substantially elliptical cross-sectional shapes, such as a prolate spheroid and an oblate spheroid. In addition, the carrier is preferably in the form of a membrane because when the carrier is in a membrane form, the solvent can not only be spread in the thickness direction and used, but can also be spread in the surface direction and used in thin-layer chromatography.

When the carrier is in the form of particles, the particle size is not particularly limited and may be 1.0 μm or greater, 3.0 μm or greater, or 4.0 μm or greater, and may be 50.0 μm or less, 40.0 μm or less, or 30.0 μm or less. That is, the median size of the carrier particles may be, for example, from 1.0 μm to 50.0 μm, from 3.0 μm to 40.0 μm, or from 4.0 μm to 30.0 μm. In the present disclosure, the "particle size" means a median size corresponding to a 50% cumulative value of a cumulative volume distribution curve, that is, a volume-based cumulative 50% size (D50), as measured by a laser diffraction-scattering-type particle size distribution analyzer.

2. Method for Producing Separation Agent

The method for producing the separation agent according to the present embodiment is not particularly limited, but includes supporting the polyacetylene compound on a carrier.

Supporting Process

As a method for supporting the polyacetylene compound on the carrier, any method typified by known supporting methods and supporting methods based thereon can be used. As a known supporting method, it is preferable to adopt a method in which a coating liquid prepared by dissolving the polyacetylene compound in an organic solvent is coated (physically adsorbed) on the surface of the carrier, after which the organic solvent is removed. The organic solvent is not particularly limited as long as the organic solvent can dissolve the polyacetylene compound, but from the perspective of having high solubility of the polyacetylene compound and the perspective of ease of removal after coating, the organic solvent is preferably a hydrocarbon solvent such as benzene, toluene, or xylene.

Another example of a known supporting method is a method in which the polyacetylene compound is supported on the carrier through a chemical bond such as a covalent bond. Specifically, the support through a chemical bond can be

carried out by reacting a reactive group introduced into a side chain of the polyacetylene compound with a reactive group present on the surface of the carrier. The reactive group present on the surface of the carrier may be a group present on the surface of the untreated carrier, or may be a group introduced to the surface of the carrier by subjecting the carrier to a surface treatment using a surface treatment agent, for example, a silane coupling agent such as 3-aminopropyltriethoxysilane or 3-glycidyloxypropyltrimethoxysilane.

Yet another example of a known supporting method is a method in which a pair of so-called click reaction partners are introduced in a side chain of the polyacetylene compound and on the surface of the carrier, respectively, and are reacted with each other.

Polyacetylene Compound Production

The method for producing the separation agent according to the present embodiment may include producing a polyacetylene compound by polymerizing an acetylene monomer including at least one type of acetylene compound represented by any one of General Formulae (4) to (6).

[Chem. 8]

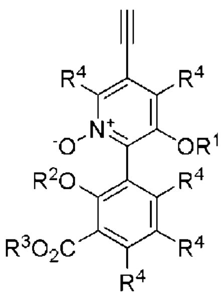

(4)

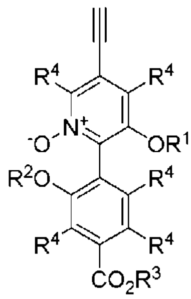

(5)

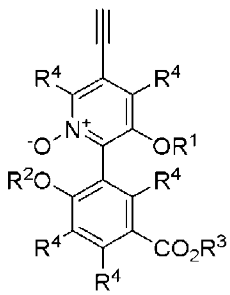

(6)

In General Formulae (4) to (6), $R^1$, $R^2$, $R^3$, and $R^4$ are synonymous with $R^1$, $R^2$, $R^3$, and $R^4$ in General Formulae (1) to (3), respectively, and preferred embodiments thereof are also the same.

When a polyacetylene compound having a unidirectional helical structure is to be produced, the acetylene compound represented by any one of General Formulae (4) to (6) is preferably an S-enantiomer of the acetylene compound represented by any one of General Formulae (4S) to (6S) or an R-enantiomer of the acetylene compound represented by any one of General Formulae (4R) to (6R).

[Chem. 9]

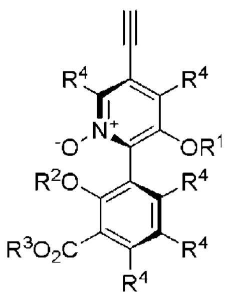

(4S)

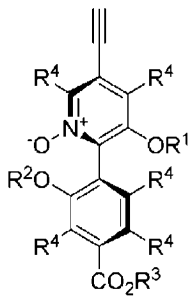

(5S)

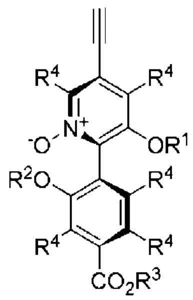

(6S)

[Chem. 10]

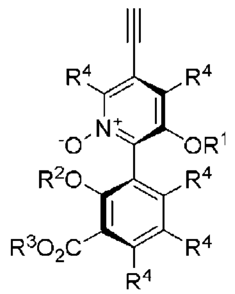

(4R)

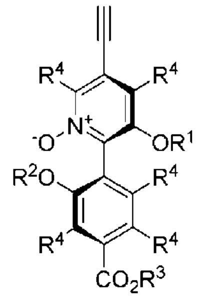

(5R)

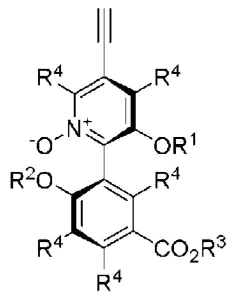

(6R)

In General Formulae (4S) to (6S) and General Formulae (4R) to (6R), $R^1$, $R^2$, $R^3$, and $R^4$ are synonymous with $R^1$, $R^2$, $R^3$, and $R^4$ in General Formulae (4) to (6), respectively, and preferred embodiments thereof are also the same.

The S-enantiomer and the R-enantiomer of the acetylene compound are prepared by optical resolution in which the racemate of the acetylene compound represented by any one of General Formulae (4) to (6) is optically resolved through chromatography. As the chromatography, any method such as liquid chromatography can be appropriately used.

The S-enantiomer and the R-enantiomer of the acetylene compound can reduce the distortion of the helical structure of the polyacetylene compound to be produced and can improve the optical resolution capability, and therefore a higher enantiomeric excess is preferable. Specifically, the enantiomeric excess (ee) of the S-enantiomer and the R-enantiomer of the acetylene compound is preferably 90%ee or greater, more preferably 95%ee or greater, and still more preferably 98%ee or greater.

The acetylene monomer may contain an acetylene compound (hereinafter, may be referred to as an "additional acetylene compound") other than the acetylene compound represented by any one of General Formulae (4) to (6). The additional acetylene compound is a compound from which additional repeating units are derived, and examples thereof include acetylene and an acetylene compound having an alkoxysilyl group.

The acetylene compound represented by any one of General Formulae (4R) to (6R) and the additional acetylene compound can be synthesized by appropriately combining any organic synthesis reactions.

In the production of the polyacetylene compound, the polymerization of the acetylene monomer can be carried out by any polymerization method such as a known alkyne polymerization method or a method based on a known alkyne polymerization method. As a known alkyne polymerization method, a method described in J. Am. Chem. Soc. 2021, 143, pp. 12725-12735 is preferably used.

3. Separation Target

Due to the presence of the 2-phenylpyridine-N-oxide structure in the side chain of the polyacetylene compound, the separation agent according to the present embodiment exhibits separation performance for various compounds, and can also separate a mixture of compounds having similar structures into the individual compounds. Examples of mixtures of compounds having mutually similar structures include a mixture of chain isomers, a mixture of regioisomers, a mixture of geometric isomers, and a mixture of analogs.

The separation agent according to the present embodiment can also separate optical isomers by using a polyacetylene compound having a unidirectional helical structure. The optical isomer is not particularly limited, and examples thereof include alcohols, ketols, paracyclophane derivatives, and metal complexes. Specific examples of the alcohol include 1-cyclohexylethanol, 2-butanol, 2-ethylhexyl alcohol, 2-decanol, 2-octyldodecanol, 1-octen-3-ol, 1-methoxy-2-propanol, and 1,2-diphenyl-1,2-ethanediol. Specific examples of ketols include benzoin, 4'-(dimethylamino) benzoin, and 3-hydroxybutan-2-one. Specific examples of the paracyclophane derivative include 4-methyl[2.2]paracyclophane, 4-bromo[2.2]paracyclophane, and 4-vinyl[2.2]paracyclophane. Specific examples of the metal complex include ruthenium(III) tris(acetylacetonate), cobalt(III) tris(acetylacetonate), chromium(III) tris(acetylacetonate), and aluminum(III) tris(acetylacetonate). As presented in the Examples section described below, the separation agent according to the present embodiment tends to have high separation performance for alcohols, and particularly for aliphatic alcohols. Therefore, the separation agent according to the present embodiment is suitable for the separation of aliphatic alcohols and optical resolution of chiral aliphatic alcohols.

4. Separation Agent Applications

The separation agent according to the present embodiment can be used in various types of chromatography such as high-performance liquid chromatography (HPLC), supercritical fluid chromatography (SFC), ion exchange chromatography (IEC), and thin layer chromatography (TLC). When the separation agent according to the present embodiment is packed in a column container to form a chromatography column, the separation agent easily exhibits separation performance and thus is preferably used in column chromatography.

Examples of a chromatography device provided with a chromatography column include a high performance liquid chromatograph, a supercritical fluid chromatograph, and an ion exchange chromatograph.

5. Method for Evaluating Separation Performance of Separation Agent

As an index for evaluating the separation performance of the stationary phase, a retention coefficient (k) and/or a separation coefficient ($\alpha$) can be used. The retention coefficient and the separation coefficient are determined by, for example, filling a column with the separation agent, separating a sample by column chromatography, and carrying out calculations based on the following Equations (i) to (iii). one or both of the retention coefficient and the separation coefficient having a larger value indicates a higher separation performance. Generally, if the separation coefficient ($\alpha$) exceeds 1.0, optical isomers can be separated. In addition, when the separation coefficient ($\alpha$) is 1.2 or greater, the optical resolution capability is high, and the optical purity of an optical isomer mixture having a biased composition of, for example, 90%ee or greater or 95%ee or greater can be accurately analyzed and evaluated.

-

$$\text{Retention coefficient } k1 = (t1 - t0)/t0 \quad \text{(i)}$$

-

$$\text{Retention coefficient } k2 = (t2 - t0)/t0 \quad \text{(ii)}$$

-

$$\text{Separation coefficient } \alpha = k2/k1 \quad \text{(iii)}$$

k1: Retention coefficient of the more weakly retained component
k2: Retention coefficient of the more strongly retained component
t0: Dead time (The time from introduction of a material that does not interact with the separation agent into the column until elution of the material. For convenience, the elution time of tri-tert-butylbenzene is used as the dead time.)
t1: Elution time of the more weakly retained component
t2: Elution time of the more strongly retained component

Examples

Hereinafter, the present disclosure will be described more specifically with reference to Examples, but the present disclosure is not limited to the following Examples as long as there is not deviation from the gist of the present disclosure.

Synthesis Example 1: Synthesis of Acetylene Compound A

[Chem. 11]

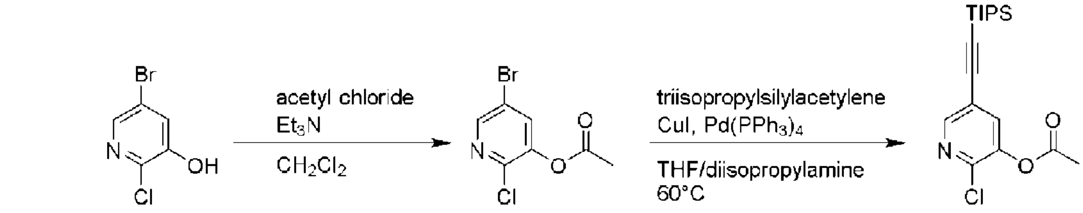


5-bromo-2-chloropyridin-3-ol 1 2

[Chem. 12]

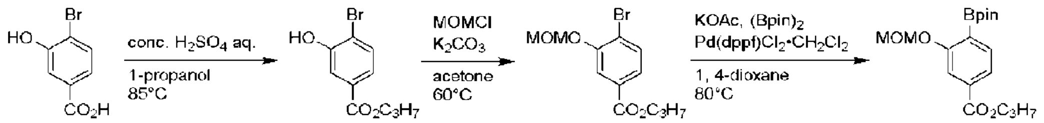


4-bromo-3-hydroxybenzoic acid 3 4 5

[Chem. 13]

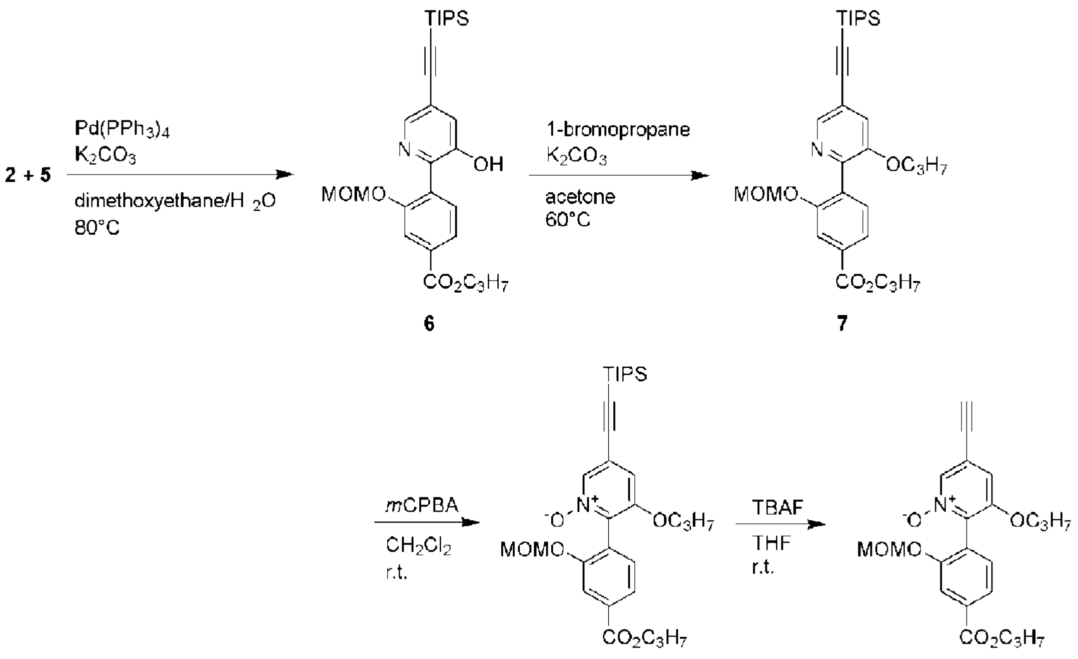


8 acetylene compound A

In a nitrogen atmosphere, 5-bromo-2-chloropyridin-3-ol (10.1 g, 48.6 mmol, 1.0 eq.) and triethyl amine (26 mL) were dissolved in dichloromethane (100 mL). The resulting solution was placed in an ice bath, acetyl chloride (7.40 mL, 99.0 mmol, 2.0 eq.) was added thereto, and the mixture was stirred for 1 hour. The reaction liquid was returned to room temperature and further stirred for 2 hours. Water (100 mL) was then added to the reaction liquid, and the mixture was stirred for 5 minutes, after which the organic phase was separated. The organic phase was washed with water and then a saturated saline solution, and then dried with sodium sulfate. Insoluble matter was removed from the organic phase by filtration, the solvent was removed from the filtrate by distillation under reduced pressure, and a crude product was produced. The crude product was purified by silica gel chromatography (n-hexane/ethyl acetate = 9/1 (v/v)), and thereby a compound 1 was produced as a white solid (11.5 g, 45.9 mmol, yield of 94.8%).

In a nitrogen atmosphere, the compound 1 (5.03 g, 20.1 mmol, 1.0 eq.), copper(I) iodide (80.1 mg, 421 μmol, 0.02 eq.) and tetrakis (triphenylphosphine)palladium(0) (229 mg, 198 μmol, 0.01 eq.) were placed in a reaction container and dissolved in degassed THF/diisopropylamine (= 5/1 (v/v), 40 mL). Triisopropylsilylacetylene (4.45 mL, 20.0 mmol, 1.0 eq.) was added dropwise to the resulting solution at room temperature, and the mixture was reacted at 60°C for 11 hours with being stirred. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/chloroform = from 9/1 to 7/3 (v/v)), and thereby a compound 2 was produced as a pale yellow solid (5.68 g, 16.0 mmol, yield of 79.9%).

In a nitrogen atmosphere, 4-bromo-3-hydroxybenzoic acid (20.4 g, 94.0 mmol) was placed in a reaction container and dissolved in 1-propanol (50 mL). Concentrated sulfuric acid (0.50 mL) was added dropwise to the resulting solution at room temperature, and the mixture was reacted at 80°C for 18 hours with being stirred. The reaction liquid was diluted with ethyl acetate, washed with water and then with a saturated saline solution, and then dried with sodium sulfate. Subsequently, the insoluble matter was removed through filtration, the solvent was removed from the filtrate through distillation under reduced pressure, and thereby a compound 3 was produced as a white solid (20.0 g, 77.2 mmol, yield of 82.1%).

In a nitrogen atmosphere, the compound 3 (19.8 g, 76.4 mmol, 1.0 eq.) and potassium carbonate (24.3 g, 176 mmol, 2.3 eq.) were placed in a reaction container and dissolved in acetone (285 mL). Chloromethyl methyl ether (6.3 mL, 84 mmol, 1.1 eq.) was added dropwise to the resulting solution at room temperature, and the mixture was reacted at 70°C for 21 hours with being stirred. The solvent was removed from the reaction solution by distillation under reduced pressure, and the resulting residue was diluted with n-hexane. The diluted liquid was washed with water and then dried with sodium sulfate. Subsequently, the insoluble matter was removed through filtration, the solvent was removed from the filtrate through distillation under reduced pressure, and thereby a compound 4 was produced as a colorless liquid (23.1 g, 76.2 mmol, yield of 99.7%).

In a nitrogen atmosphere, the compound 4 (7.65 g, 25.2 mmol, 1.0 eq.), potassium acetate (7.42 g, 75.6 mmol, 3.0 eq.), and bis(pinacolato)diboron (7.71 g, 30.4 mmol, 1.2 eq.) were placed in a reaction container and dissolved in 1,4-dioxane (50 mL). At room temperature, 1,1'-bis(diphenylphosphino)ferrocene] dichloropalladium(II) (1.97 g, 2.41 mmol, 0.1 eq.) was added to the resulting solution, and the mixture was reacted at 80°C for 36 hours with being stirred. The solvent was removed from the reaction solution by distillation under reduced pressure, and the resulting residue was diluted with n-hexane. The diluted liquid was washed with water and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 1/1 (v/v)), and thereby a compound 5 was produced as a yellow liquid (7.19 g, 20.5 mmol, yield of 81.5%).

In a nitrogen atmosphere, the compound 2 (5.03 g, 14.3 mmol, 1.0 eq.), the compound 5 (7.19 g, 20.5 mmol, 1.4 eq.), potassium carbonate (3.91 g, 28.3 mmol, 2.0 eq.), and tetrakis (triphenylphosphine)palladium(0) (1.01 g, 874 μmol, 0.06 eq.) were placed in a reaction container, and the atmosphere in the reaction container was purged with argon. A mixture of degassed dimethoxyethane/water (= 3/1 (v/v), 28 mL) was added to the reaction container, and the resulting solution was reacted at 80°C for 4 hours with being stirred. Subsequently, n-propanol (5 mL) was added to the reaction liquid, and the mixture was further stirred at 80°C for 12 hours. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = from 95/5 to 9/1 (v/v)), and thereby a compound 6 was produced (4.18 g, 8.40 mmol, yield of 59.1%).

In a nitrogen atmosphere, the compound 6 (1.89 g, 3.80 mmol, 1.0 eq.) and potassium carbonate (2.62 g, 19.0 mmol, 5.0 eq.) were dissolved in acetone (38 mL). Next, 1-bromopropane (1.40 mL, 15.4 mmol, 4.0 eq.) was added to the resulting solution, and the mixture was refluxed at 60°C for 20 hours. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. This crude product was purified by silica gel chromatography (n-hexane/ethyl acetate = 9/1 (v/v)) and then further purified by silica gel chromatography (n-hexane/chloroform = from 1/1 to 1/4 (v/v)), and thereby a compound 7 was produced as a yellow liquid (1.72 g, 3.19 mmol, yield of 83.9%).

In a nitrogen atmosphere, the compound 7 (914 mg, 1.69 mmol, 1.0 eq.) was dissolved in dichloromethane (17 mL). While the resulting solution was cooled in an ice bath, 3-chloroperbenzoic acid (water content of 20 wt.%, 603 mg, 3.49 mmol, 2.1 eq.) was added thereto, and the mixture was then reacted at room temperature for 2 hours with being stirred. The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (amino silica; n-hexane/ethyl

acetate = 9/1 (v/v)), and thereby a compound 8 was produced as a white solid (912 mg, 1.64 mmol, yield of 96.9%).

In a nitrogen atmosphere, the compound 8 (897 mg, 1.62 mmol, 1.0 eq.) was dissolved in THF (16 mL). While the resulting solution was cooled in an ice bath, a THF solution of tetrabutylammonium fluoride (1.0 M, 2.0 mL, 2.0 mmol, 1.2 eq.) was added dropwise thereto, and the mixture was then reacted at room temperature for 2 hours with being stirred. The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 3/7 (v/v)), and thereby a racemate of the acetylene compound A was produced as a colorless transparent liquid (541 mg, 1.35 mmol, yield of 83.5%).

The racemate of the acetylene compound A was separated into the S-enantiomer and the R-enantiomer by carrying out liquid chromatography under the following separation conditions.

- Separation Conditions

Eluent: n-hexane/chloroform/2-propanol (= 70/30/2 (v/v/v))
Flow rate: 0.8 mL/min
Temperature: 0°C
Column: CHIRALPAK (trade name) IB column (0.46 cmφ × 25 cm; available from Daicel Corporation)
Detection: UV 254 nm

Synthesis Example 2: Synthesis of Acetylene Compound B

[Chem. 14]

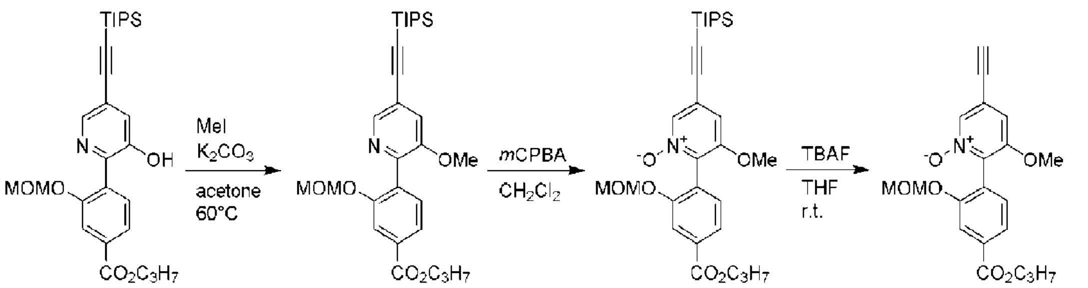


6 9 10 acetylene compound B

In a nitrogen atmosphere, the compound 6 (0.88 g, 1.8 mmol, 1.0 eq.) and potassium carbonate (0.49 g, 3.5 mmol, 2.0 eq.) were dissolved in acetone (18 mL). Iodomethane (0.22 mL, 3.5 mmol, 2.0 eq.) was added to the resulting solution and refluxed at 60°C for 6 hours. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 9/1 (v/v)), and thereby a compound 9 was produced (0.18 g, 0.35 mmol, yield of 20%).

In a nitrogen atmosphere, the compound 9 (150 mg, 0.294 mmol, 1.0 eq.) was dissolved in dichloromethane (3.0 mL). While the resulting solution was cooled in an ice bath, 3-chloroperbenzoic acid (water content of 20 wt.%, 0.10 g, 0.60 mmol, 2.0 eq.) was added thereto, and the mixture was then reacted at room temperature for 7 hours with being stirred. The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (amino silica; n-hexane/ethyl acetate = 9/1 (v/v)), and thereby a compound 10 was produced (112 mg, 0.212 mmol, yield of 72.1%).

In a nitrogen atmosphere, the compound 10 (111 mg, 0.211 mmol, 1.0 eq.) was dissolved in THF (0.84 mL). While the resulting solution was cooled in an ice bath, a THF solution of tetrabutylammonium fluoride (1.0 M, 0.25 mL, 0.25 mmol, 1.2 eq.) was added dropwise thereto, and the mixture was then reacted at room temperature for 2 hours with being stirred.

The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 3/7 (v/v)), and thereby a racemate of the acetylene compound B was produced (48 mg, 0.13 mmol, yield of 61%).

The racemate of the acetylene compound B was separated into the S-enantiomer and the R-enantiomer by carrying out liquid chromatography under the same separation conditions as in Synthesis Example 1.

Synthesis Example 3: Synthesis of Acetylene Compound C

[Chem. 15]

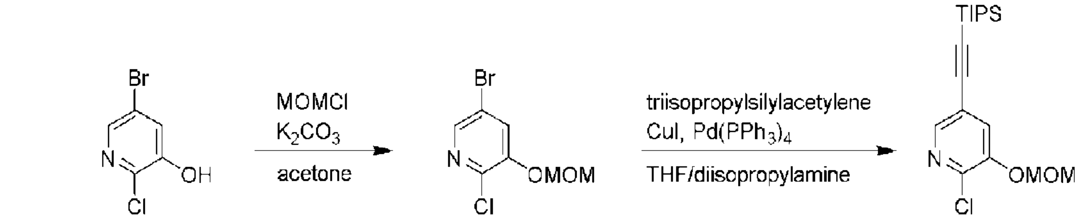


5-bromo-2-chloropyridin-3-ol **11** **12**

[Chem. 16]

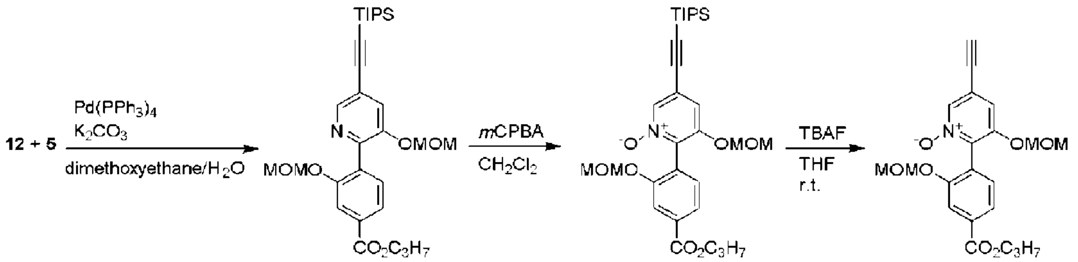


13 14 **acetylene compound C**

In a nitrogen atmosphere, 5-bromo-2-chloropyridin-3-ol (2.01 g, 9.66 mmol) and potassium carbonate (3.22 g, 23.3 mmol) were dissolved in acetone (30 mL). Chloromethyl methyl ether (800 μL, 10.6 mmol) was added dropwise to the resulting solution at room temperature, and the mixture was reacted at 70°C for 2 hours with being stirred. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 9/1 (v/v)), and thereby a compound 11 was produced as a colorless liquid (2.13 g, 8.43 mmol, yield of 87.3%).

In a nitrogen atmosphere, the compound 11 (1.95 g, 7.74 mmol), tetrakis(triphenylphosphine)palladium(0) (89.4 mg, 77.4 mmol), and copper(I) iodide (29.7 mg, 155 μmol) were placed in a reaction container and dissolved in degassed THF/diisopropylamine (= 5/1 (v/v), 36 mL). Triisopropylsilylacetylene (1.72 mL, 7.74 mmol) was added dropwise to the resulting solution at room temperature, and the mixture was then reacted at 60°C for 2 hours with being stirred. The reaction liquid was diluted with ethyl acetate, washed with water and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = from 95/5 to 6/4 (v/v)), and thereby a compound 12 was produced as a white solid (2.23 g, 6.30 mmol, yield of 81.4%).

In a nitrogen atmosphere, the compound 12 (1.01 g, 2.86 mmol), the compound 5 (1.42 g, 4.06 mmol), potassium carbonate (771 mg, 5.58 mmol), and tetrakis(triphenylphosphine)palladium(0) (330 mg, 286 μmol) were placed in a reaction container, and the atmosphere in the reaction container was purged with argon. A mixture of degassed dimethoxyethane/water (= 3/1 (v/v), 6.0 mL) was added to the reaction container, and the resulting solution was reacted at 80°C for 24 hours with being stirred. The reaction liquid was diluted with ethyl acetate, washed with a 1N hydrochloric

acid aqueous solution, then with water, and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel column chromatography (n-hexane/ethyl acetate = 95/5 (v/v)), and thereby a compound 13 was produced as a yellow liquid (1.19 g, 2.20 mmol, yield of 76.9%).

In a nitrogen atmosphere, the compound 13 (914 mg, 1.69 mmol) was dissolved in dichloromethane (17 mL). While the resulting solution was cooled in an ice bath, 3-chloroperbenzoic acid (water content of 20 wt.%, 400 mg, 2.32 mmol) was added thereto, and the mixture was then reacted at room temperature for 2 hours with being stirred. The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (amino silica; n-hexane/ethyl acetate = 9/1 (v/v)), and thereby a compound 14 was produced as a white solid (924 mg, 1.66 mmol, yield of 98.2%).

In a nitrogen atmosphere, the compound 14 (924 mg, 1.66 mmol) was dissolved in THF (8.4 mL). While the resulting solution was cooled in an ice bath, a THF solution of tetrabutylammonium fluoride (1.0 M, 2.3 mL) was added dropwise thereto, and the mixture was then reacted at room temperature for 4 hours with being stirred. The reaction liquid was diluted with ethyl acetate, washed with a saturated aqueous solution of sodium bicarbonate and then with a saturated saline solution, and then dried with sodium sulfate. Subsequently, the insoluble matter was removed by filtration, and the solvent was removed from the filtrate by distillation under reduced pressure, and a crude product was thereby produced. The crude product was purified by silica gel chromatography (n-hexane/ethyl acetate = 3/7 (v/v)), and thereby a racemate of the acetylene compound C was produced as a white solid (462 mg, 1.15 mmol, yield of 69.3%).

The racemate of the acetylene compound C was separated into the S-enantiomer and the R-enantiomer by carrying out liquid chromatography under the same separation conditions as in Synthesis Example 1.

Synthesis Example 4: Synthesis of Polyacetylene Compound A

[Chem. 17]

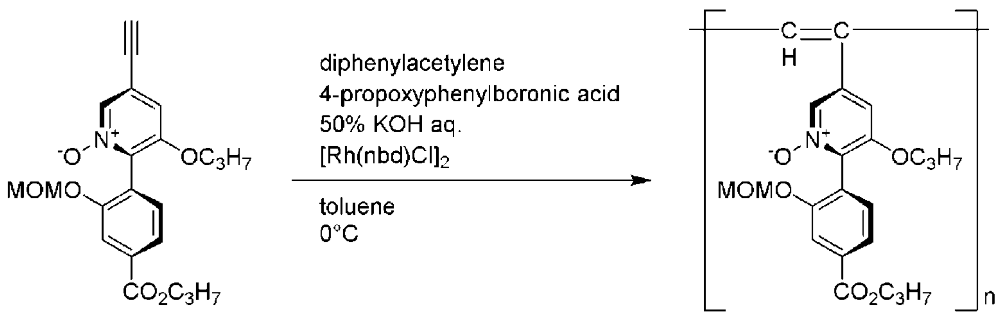


In a nitrogen atmosphere, 4-propoxyphenylboronic acid (27.8 mg, 154 μmol), chloro(2,5-norbornadiene) rhodium(I) dimer (23.8 mg, 51.6 μmol), and diphenylacetylene (74.3 mg, 417 μmol) were added to a reaction container. THF (490 μL) was then added thereto, the mixture was stirred at room temperature, and a solution was produced. The reaction container was cooled to 0°C, a 50 wt.% potassium hydroxide aqueous solution (30.0 μL) was added to the solution in the reaction container, and the mixture was stirred at 0°C for 5 minutes, after which triphenylphosphine (84.0 mg, 321 μmol) was further added. Next, 50 μL of the resulting solution was collected and diluted with THF (2.35 mL), and thereby a catalyst solution was prepared.

The S-enantiomer (99%ee, 70.7 mg, 177 μmol) of the acetylene compound A was inserted into the reaction container, and the atmosphere in the reaction container was purged with nitrogen. Toluene (1.35 mL) was added to the acetylene compound A, the mixture was stirred at 0°C, and a homogeneous solution was produced. The catalyst solution (71 μL) was added to this solution, and a reaction was carried out at 0°C with the mixture being stirred for 24 hours. After the reaction, an excess amount of acetic acid (1 drop) was added to the reaction liquid to stop the reaction, after which methanol was further added to carry out re-precipitation, and thereby a polyacetylene compound A was produced as an orange fibrous solid (68.1 mg, yield of 96.3%).

The number average molecular weight (Mn) and the weight average molecular weight (Mw) of the polyacetylene compound A were calculated based on size exclusion chromatography (SEC) and a calibration of polystyrene standards. In addition, the polydispersity index (PDI) was calculated from the number average molecular weight (Mn) and the weight

average molecular weight (Mw).

The measurement conditions for the size exclusion chromatography were as indicated below. Moreover, the number average molecular weight (Mn), the weight average molecular weight (Mw), and the polydispersity index (PDI) of the polyacetylene compound A are shown in Table 1.

- SEC Measurement Conditions

Device: "Size Exclusion Chromatography System" available from JASCO Corporation
Column: "TSKgel $\alpha$-M" (30 cm) available from Tosoh Corporation
Eluent: 0.5 wt.% TBAB in THF
Flow rate: 1.0 mL/min
Oven temperature: 40°C
Sample injection volume: 0.10 mL
Standard polystyrene: "TSKgel standard polystyrene" available from Tosoh Corporation

Synthesis Example 5: Synthesis of Polyacetylene Compound B

[Chem. 18]

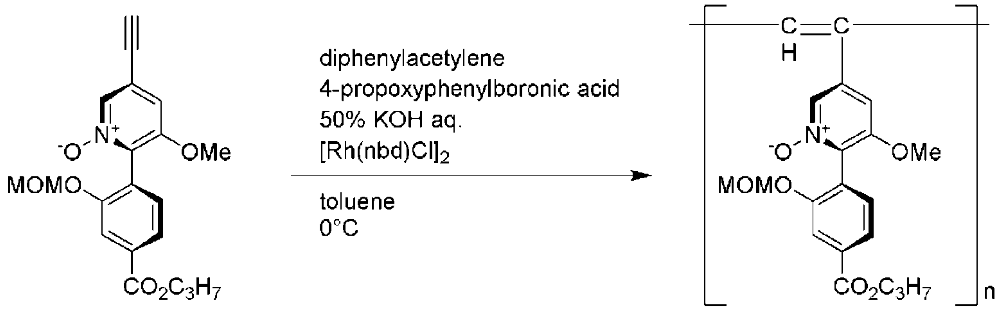


A polyacetylene compound B was synthesized in the same manner as in Synthesis Example 4 with the exception that the S-enantiomer (99%ee) of the acetylene compound A was changed to the S-enantiomer (99%ee) of the acetylene compound B and the reaction conditions were changed as shown in Table 1. The number average molecular weight (Mn), the weight average molecular weight (Mw), and the polydispersity index (PDI) were also calculated in the same manner as in Synthesis Example 4. The results are shown in Table 1.

Synthesis Example 6: Synthesis of Polyacetylene Compound C

[Chem. 19]

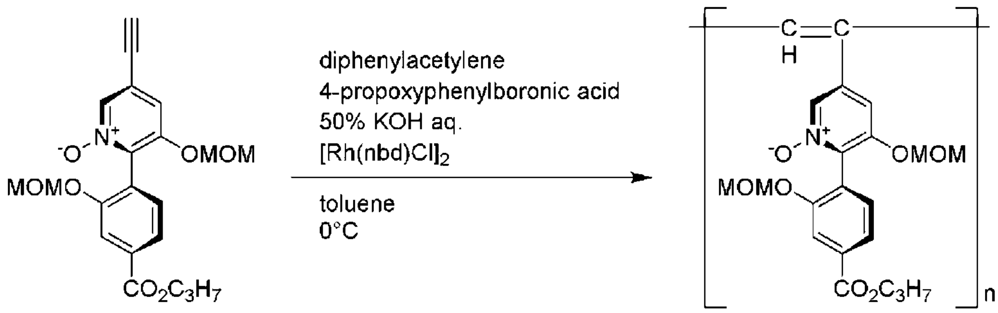


A polyacetylene compound B was synthesized in the same manner as in Synthesis Example 4 with the exception

that the S-enantiomer (99%ee) of the acetylene compound A was changed to the S-enantiomer (99%ee) of the acetylene compound C and the reaction conditions were changed as shown in Table 1. The number average molecular weight (Mn), the weight average molecular weight (Mw), and the polydispersity index (PDI) were also calculated in the same manner as in Synthesis Example 4. The results are shown in Table 1.

[Table 1]

| | Acetylene Compound | | Toluene (mL) | Catalyst Solution (μL) | Monomer/Rh Molar Ratio | Reaction Time (h) | Yield | | Mn (x$10^5$) | Mw (x$10^5$) | PDI |
|---|---|---|---|---|---|---|---|---|---|---|---|
| | (mg) | (μmol) | | | | | (mg) | (%) | | | |
| Synthesis Example 4 | 70.7 | 177 | 1.35 | 71 | 600 | 24 | 68.1 | 96.3 | 1.98 | 4.10 | 2.07 |
| Synthesis Example 5 | 50.5 | 136 | 1.03 | 54 | 600 | 24 | 48.1 | 95.2 | 2.39 | 3.18 | 1.33 |
| Synthesis Example 6 | 123 | 305 | 2.34 | 122 | 600 | 24 | 113 | 91.8 | 3.06 | 7.71 | 2.52 |

Example 1

The polyacetylene compound A was dissolved in toluene to prepare a coating liquid. This coating liquid (polyacetylene compound A: 37.9 mg) was added dropwise at room temperature to a porous silica gel (particle size: 5 μm, average pore size: 100 nm, 420 mg) for filling a column, and the porous silica gel was coated with the polyacetylene compound A. The coated porous silica gel was suspended in n-hexane/isopropyl alcohol (= 97/3 (v/v)), which was a poor solvent for the polyacetylene compound A. The resulting suspension was filtered through a metal filter with a 45 μm square mesh, and coarse particles were thereby removed. The suspension was then left to stand to precipitate a separation agent A, and the supernatant was removed, and thereby the total amount of the solution was 20 mL or less. Approximately 4 mL of liquid paraffin was added thereto, and the mixture was stirred to prepare a filler. The resulting filler was packed into a metal column (0.20 cmφ × 25 cm) while pressure was applied, and a chromatography column was thereby prepared.

Example 2

A chromatography column filled with a separation agent B was prepared in the same manner as in Example 1 with the exception that the polyacetylene compound A was changed to the polyacetylene compound B.

Example 3

A chromatography column filled with a separation agent C was prepared in the same manner as in Example 1 with the exception that the polyacetylene compound A was changed to the polyacetylene compound C.

Comparative Example 1

A CHIRALPAK (trade name) IA column (0.46 cmφ × 25 cm; available from Daicel Corporation), which is a column filled with a separation agent having amylose tris(3,5-dimethylphenylcarbamate) supported on silica gel, was used as a chromatography column of Comparative Example 1.

Comparative Example 2

A CHIRALPAK (trade name) IB N-5 column (0.46 cmφ × 25 cm; available from Daicel Corporation), which is a column filled with a separation agent having cellulose tris(3,5-dimethylphenylcarbamate) supported on silica gel, was used as a chromatography column of Comparative Example 2.

Comparative Example 3

A CHIRALPAK (trade name) IC column (0.46 cmφ × 25 cm; available from Daicel Corporation), which is a column filled with a separation agent having cellulose tris(3,5-dichlorophenylcarbamate) supported on silica gel, was used as a chromatography column of Comparative Example 3.

Comparative Example 4

A CHIRALPAK (trade name) IG column (0.46 cmφ × 25 cm; available from Daicel Corporation), which is a column filled with a separation agent having amylose tris(3-chloro-5-methylphenylcarbamate) supported on silica gel, was used as a chromatography column of Comparative Example 4.

Evaluation of Separation Performance

The chromatography columns of Examples 1 to 3 and Comparative Examples 1 to 4 were connected to a liquid chromatography device ("Liquid Chromatography System" available from JASCO Corporation). Optical resolution of a racemate was carried out under the following analysis conditions using this liquid chromatography device, and the separation performance of each separation agent was evaluated. The results are presented in Tables 2 to 5.

In Tables 2 to 5, in cases in which two peak tops could not be detected by the liquid chromatography device but the peak tops were visually broadened and a slight separation performance was observed, the separation coefficient (α) was set to ca.1, and thereby such cases were differentiated from cases in which the racemate could not be separated at all (separation coefficient (α) = 1.00). FIG. 1 shows schematic diagrams of the chromatograms for a case in which the separation coefficient (α) was ca.1 and for a case in which the separation coefficient (α) was 1.00.

- Analysis Conditions

Eluent (Tables 2 and 3): n-hexane/isopropyl alcohol = 99/1 (v/v)
Eluent (Tables 4 and 5): n-hexane/isopropyl alcohol = 90/10 (v/v)
Flow rate: 0.15 mL/min
Column temperature: -10°C
Detector: differential refractive index detector (IR) or optical rotation detector (OR)

[Table 2]

| Racemate | Example 1 | | Comparative Example 1 | | Comparative Example 2 | | Comparative Example 3 | | Comparative Example 4 | |
|---|---|---|---|---|---|---|---|---|---|---|
| | k1 | α | k1 | α | k1 | α | k1 | α | k1 | α |
| 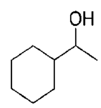 | 0.40 | 1.43 | 3.33 | 1.06 | 2.50 | 1.03 | 2.78 | 1.08 | 4.51 | 1.01 |
| 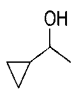 | 0.71 | 1.33 | 5.75 | ca.1 | 3.67 | 1.02 | -*2 | -*2 | 9.49 | 1.04 |
| 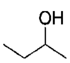 | 0.75 | 1.10 | 4.18 | 1.11 | 2.84 | 1.00 | -*2 | -*2 | 5.33 | 1.08 |
| 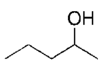 | 0.55 | 1.19 | 3.35 | 1.06 | 2.66 | 1.00 | 3.13 | ca.1 | 4.94 | 1.06 |
| 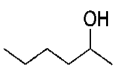 | 0.45 | 1.25 | 2.87 | 1.03 | 2.52 | ca.1 | 2.81 | ca.1 | 3.64 | 1.00 |
| 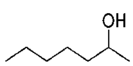 | 0.34 | 1.21 | 2.79 | ca.1 | 2.39 | 1.06 | 2.83 | ca.1 | 3.39 | 1.00 |
| 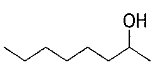 | 0.31 | 1.20 | 2.71 | 1.03 | 2.36 | 1.04 | 2.78 | ca.1 | 3.19 | 1.00 |
| 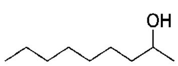 | 0.29 | 1.19 | 2.60 | 1.04 | 2.34 | 1.02 | 2.66 | ca.1 | 2.92 | ca.1 |

(continued)

| Racemate | Example 1 | | Comparative Example 1 | | Comparative Example 2 | | Comparative Example 3 | | Comparative Example 4 | |
|---|---|---|---|---|---|---|---|---|---|---|
| | k1 | α | k1 | α | k1 | α | k1 | α | k1 | α |
| 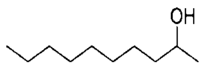 | 0.29 | 1.20 | 2.51 | 1.03 | 2.32 | ca.1 | 2.38 | ca.1 | 2.67 | ca.1 |
| 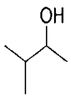 | 0.52 | 1.00 | 3.11 | 1.04 | 2.36 | 1.03 | -*2 | -*2 | 0.80 | 1.43 |
| *2: Not measured | | | | | | | | | | |

[Table 3]

| Racemate | Example 1 | | Comparative Example 1 | | Comparative Example 2 | | Comparative Example 3 | | Comparative Example 4 | |
|---|---|---|---|---|---|---|---|---|---|---|
| | k1 | α | k1 | α | k1 | α | k1 | α | k1 | α |
| 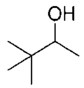 | 0.32 | 1.00 | 2.48 | ca.1 | 1.82 | 1.08 | 1.71 | 1.03 | 3.00 | 1.04 |
| 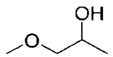 | 1.62 | 1.00 | -*1 | -*1 | -*1 | -*1 | -*1 | -*1 | -*1 | -*1 |
| 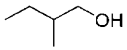 | 0.58 | 1.19 | 3.59 | 1.00 | 3.13 | 1.00 | 3.26 | 1.03 | 5.04 | 1.00 |
| 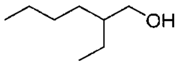 | 0.36 | ca.1 | 2.88 | 1.00 | 2.42 | 1.00 | 2.46 | ca.1 | 3.10 | 1.03 |
| 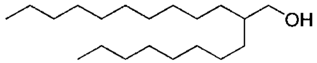 | 0.15 | ca.1 | 1.93 | 1.00 | 1.51 | ca.1 | 1.32 | ca.1 | 1.42 | ca.1 |
| 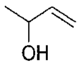 | 0.88 | 1.13 | 6.02 | ca.1 | 3.56 | 1.02 | -*2 | -*2 | 7.75 | 1.06 |
| 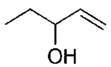 | 0.62 | ca.1 | 4.14 | 1.11 | 2.90 | 1.00 | 3.05 | 1.04 | 6.40 | 1.21 |
| 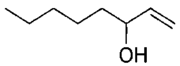 | 0.35 | ca.1 | 2.94 | 1.00 | 2.44 | 1.02 | 2.54 | 1.05 | 3.39 | 1.02 |
| 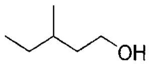 | 0.67 | 1.00 | 3.80 | 1.00 | 3.44 | 1.00 | -*2 | -*2 | 5.14 | 1.00 |
| 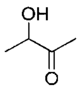 | -*1 | -*1 | -*2 | -*2 | -*1 | -*1 | -*2 | -*2 | -*2 | -*2 |

*1: Not eluted
*2: Not measured

[Table 4]

| Racemate | Example 1 | | Example 2 | | Example 3 | |
|---|---|---|---|---|---|---|
| | k1 | α | k1 | α | k1 | α |
| 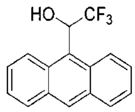 | 1.20 | 1.00 | 2.51 | 1.18 | 3.89 | 1.00 |
| 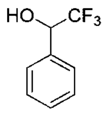 | 0.35 | 1.53 | 0.85 | 1.19 | 0.98 | 1.13 |
| 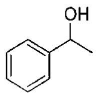 | 0.13 | 1.48 | 0.32 | ca.1 | 0.30 | 1.23 |
| 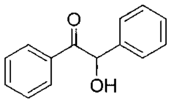 | 1.07 | ca.1 | 2.92 | 1.11 | 2.64 | 1.05 |
| 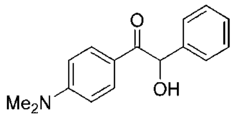 | 2.25 | 1.30 | -*1 | -*1 | 6.64 | 1.00 |
| 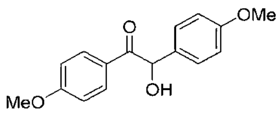 | 3.63 | 1.12 | -*1 | -*1 | 8.94 | 1.08 |
| 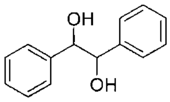 | 1.37 | 3.02 | -*1 | -*1 | 2.02 | 3.07 |
| 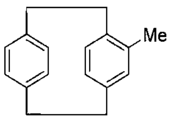 | 0.04 | 1.00 | 0.1 | 1.00 | 0.014 | 1.00 |
| 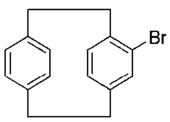 | 0.06 | 1.00 | 0.15 | ca.1 | 0.15 | 1.00 |
| 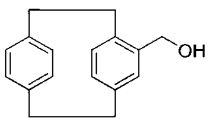 | 0.28 | 1.54 | 0.52 | ca.1 | 0.015 | 1.00 |
| 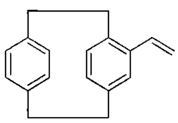 | 0.18 | 1.00 | 0.15 | 1.00 | 0.13 | 1.00 |
| *1: Not eluted | | | | | | |

[Table 5]

| Racemate | Example 1 | | Example 2 | | Example 3 | |
|---|---|---|---|---|---|---|
| | k1 | α | k1 | α | k1 | α |
| $Ru(acac)_3$ | 0.48 | 1.00 | -*1 | -*1 | 2.10 | 1.00 |
| $Co(acac)_3$ | 0.37 | 1.00 | 1.06 | 1.00 | 1.26 | 1.00 |
| $Cr(acac)_3$ | 0.33 | 1.00 | 1.11 | ca.1 | 1.34 | 1.00 |
| $Al(acac)_3$ | 0.22 | 1.00 | 0.66 | ca.1 | 0.73 | 1.00 |
| 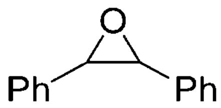 | 0.12 | 1.00 | 0.26 | 1.00 | 0.27 | 1.00 |
| 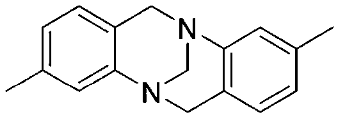 | 0.28 | 1.00 | -*1 | -*1 | 0.51 | 1.00 |
| 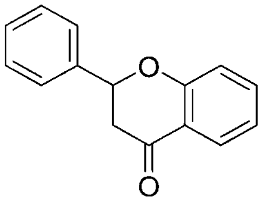 | 0.29 | 1.00 | 0.74 | 1.00 | 0.76 | 1.00 |
| 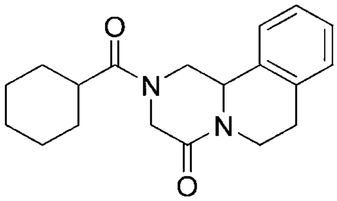 | 0.02 | 1.00 | -*1 | -*1 | 1.44 | 1.00 |
| 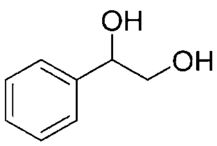 | 2.58 | 2.81 | -*2 | -*2 | 4.33 | 1.61 |
| *1: Not eluted<br>*2: Not measured | | | | | | |

Tables 2 to 5 indicate that various compounds can be separated by chromatography using the separation agents prepared in Examples 1 to 3. In addition, the tables indicate that the separation agents produced in Examples 1 to 3 have separation properties that are different from those of commonly known separation agents, and tend to exhibit, in particular, high separation performance with respect to aliphatic alcohols.

As described above, according to the present disclosure, a novel separation agent that uses a polyacetylene compound having a 2-phenylpyridine-N-oxide structure in a side chain can be provided. In addition, the separation agent of the present disclosure has separation properties different from those of known separation agents, and exhibits higher separation performance than known separation agents, depending on the separation target. Accordingly, a larger number of compounds can be efficiently separated by using the separation agent of the present disclosure.

## Claims

**1.** A separation agent comprising a polyacetylene compound supported on a carrier,

the polyacetylene compound comprising at least one type of repeating unit represented by any one of General

Formulae (1) to (3):

[Chem. 1]

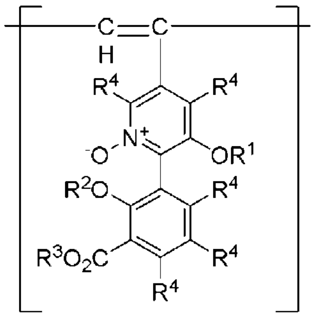

(1)

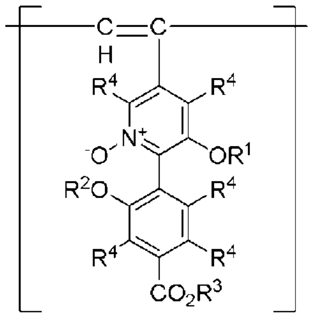

(2)

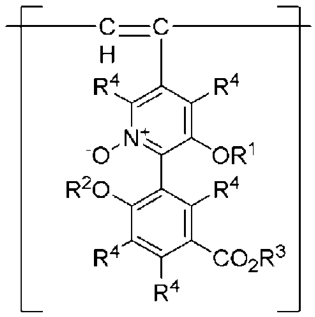

(3)

where
$R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons; and
$R^4$ are each independently a hydrogen atom or an alkyl group having from 1 to 20 carbons, the alkyl group optionally substituted with a halogen atom.

**2.** The separation agent according to claim 1, wherein the polyacetylene compound comprises 80 mol% or more of the repeating unit represented by any one of General Formulae (1) to (3) with respect to all repeating units derived from an acetylene monomer.

**3.** The separation agent according to claim 1 or 2, wherein the repeating unit represented by any one of General Formulae (1) to (3) is a repeating unit represented by any one of General Formulae (1S) to (3S) or a repeating unit represented by any one of General Formulae (1R) to (3R):

[Chem. 2]

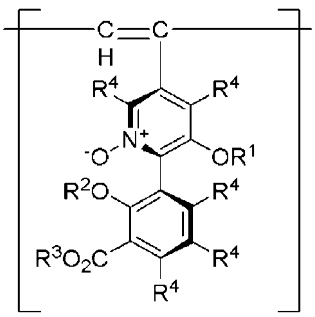

(1S)

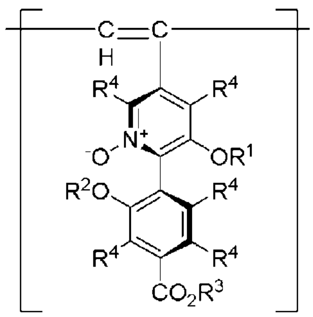

(2S)

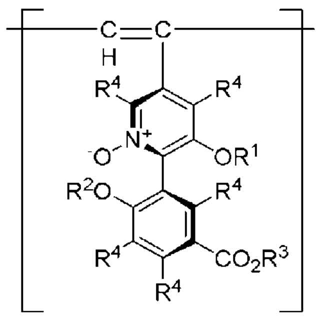

(3S)

[Chem. 3]

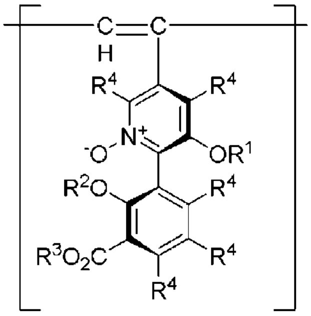
(1R)

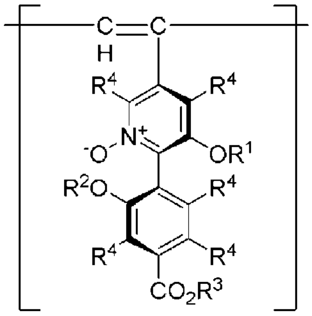
(2R)

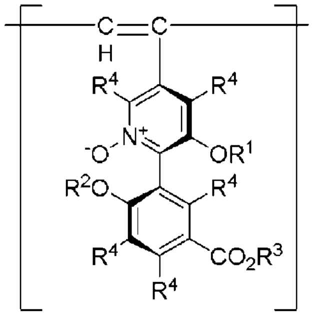
(3R)

where
$R^1$, $R^2$, $R^3$, and $R^4$ are synonymous with $R^1$, $R^2$, $R^3$, and $R^4$ in General Formulae (1) to (3), respectively.

**4.** The separation agent according to claim 3, wherein the separation agent is an optical isomer separation agent.

**5.** A chromatography column having the separation agent described in any one of claims 1 to 4 packed in a column container.

**6.** A chromatography device comprising the chromatography column described in claim 5.

**7.** A method for producing a separation agent,

wherein the method for producing a separation agent comprising a supporting step in which, a polyacetylene compound having at least one type of repeating unit represented by any one of General Formulae (1) to (3) is supported on a carrier:

[Chem. 4]

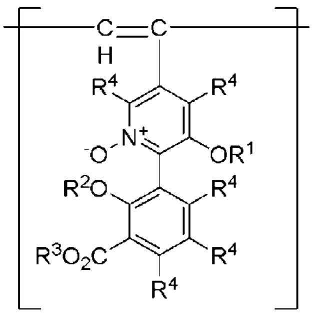
(1)

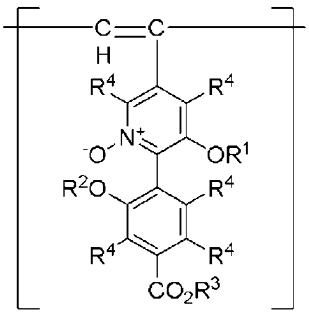
(2)

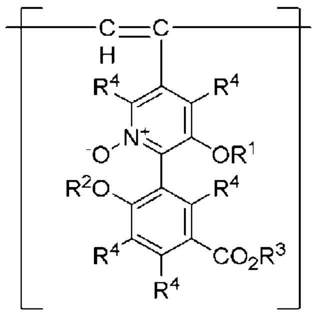
(3)

where
$R^1$, $R^2$, and $R^3$ are each independently a hydrogen atom or an alkyl group having from 1 to 20 carbons, the alkyl group optionally having one or more substituents selected from the group consisting of a halogen atom and an alkoxy group having from 1 to 10 carbons; and
$R^4$ are each independently a hydrogen atom or an alkyl group having from 1 to 20 carbons, the alkyl group optionally substituted with a halogen atom.

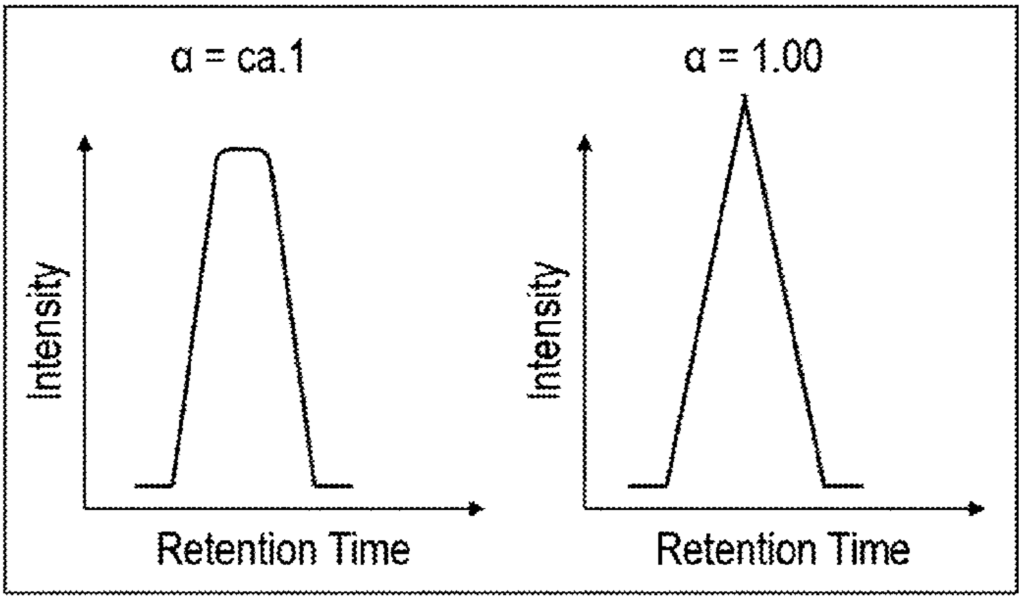
α = ca.1
α = 1.00
Intensity
Intensity
Retention Time
Retention Time

FIG. 1

## INTERNATIONAL SEARCH REPORT

International application No.
**PCT/JP2024/000780**

**A. CLASSIFICATION OF SUBJECT MATTER**

***G01N 30/88***(2006.01)i; ***B01J 20/281***(2006.01)i; ***B01J 20/288***(2006.01)i; ***B01J 20/30***(2006.01)i; ***C08F 38/02***(2006.01)i
FI: G01N30/88 W; B01J20/26 L; B01J20/281 X; B01J20/288; B01J20/30; C08F38/02

According to International Patent Classification (IPC) or to both national classification and IPC

**B. FIELDS SEARCHED**

Minimum documentation searched (classification system followed by classification symbols)

G01N30/88; B01J20/281; B01J20/288; B01J20/30; C08F38/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2016-140845 A (NATIONAL UNIVERSITY CORPORATION KANAZAWA UNIV.) 08 August 2016 (2016-08-08)<br>entire text, all drawings | 1-7 |
| A | WO 2013/168601 A1 (NATIONAL UNIVERSITY CORPORATION KANAZAWA UNIV.) 14 November 2013 (2013-11-14)<br>entire text, all drawings | 1-7 |
| A | JP 2008-291207 A (KYOUWA HAKKOU KIRIN CO., LTD.) 04 December 2008 (2008-12-04)<br>entire text, all drawings | 1-7 |
| A | JP 8-217698 A (DAICEL CHEM. IND. LTD.) 27 August 1996 (1996-08-27)<br>entire text, all drawings | 1-7 |
| A | US 2012/0259094 A1 (HEARN MILTON TW) 11 October 2012 (2012-10-11)<br>entire text, all drawings | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 February 2024** | **05 March 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
**PCT/JP2024/000780**

**C. DOCUMENTS CONSIDERED TO BE RELEVANT**

| Category* | Citation of document, with indication, where appropriate, of the relevant passages | Relevant to claim No. |
|---|---|---|
| A | JP 2022-536278 A (USTAV ORGANICKE CHEMIE A BIOCHEMIE AV CR V. V. I.) 15 August 2022 (2022-08-15) entire text, all drawings | 1-7 |

Form PCT/ISA/210 (second sheet) (July 2022)

**INTERNATIONAL SEARCH REPORT**
**Information on patent family members**

International application No.
**PCT/JP2024/000780**

| Patent document cited in search report | Publication date (day/month/year) | Patent family member(s) | Publication date (day/month/year) |
|---|---|---|---|
| JP 2016-140845 A | 08 August 2016 | (Family: none) | |
| WO 2013/168601 A1 | 14 November 2013 | (Family: none) | |
| JP 2008-291207 A | 04 December 2008 | (Family: none) | |
| JP 8-217698 A | 27 August 1996 | (Family: none) | |
| US 2012/0259094 A1 | 11 October 2012 | WO 2011/044637 A1 | |
| JP 2022-536278 A | 15 August 2022 | US 2022/0259119 A1<br>entire text, all drawings<br>WO 2020/244686 A1<br>EP 3747852 A1<br>CN 113966318 A<br>KR 10-2022-0018551 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008102920 A
- JP 2016140845 A


### Non-patent literature cited in the description


- *Chem. Rev.*, 2016, vol. 116 (3), 1094-1138
- *J. Am. Chem. Soc*, 2021, vol. 143, 12725-12735